# EUROPÄISCHE PATENTSCHRIFT

(11) **EP 2 217 470 B1**
(45) Veröffentlichungstag und Bekanntmachung des Hinweises auf die Patenterteilung: **22.07.2015**
(21) Anmeldenummer: 08853486.2
(22) Anmeldetag: 26.11.2008
(51) Int. Cl.: B60Q 1/076

(54) **SCHEINWERFER MIT EINER MESSEINRICHTUNG ZUR ERFASSUNG DER LAGE EINES LICHTMODULS**
HEADLIGHT HAVING A MEASURING APPARATUS FOR DETECTING THE POSITION OF A LIGHT MODULE
PROJECTEUR MUNI D'UN DISPOSITIF DE MESURE POUR DÉTECTER LA POSITION D'UN MODULE LUMINEUX

(30) Priorität: 30.11.2007 DE 102007058027
(43) Veröffentlichungstag der Anmeldung: 18.08.2010
(73) Patentinhaber: Hella KGaA Hueck & Co., 59552 Lippstadt (DE)
(72) Erfinder: DOLENEC, Sascha, 59439 Holzwickede (DE); DÜRKOPP, Klaus, 33129 Delbrück (DE); HANSCHMANN, Lars, 33790 Halle (DE); KÖHLER, Ulrich, 59556 Lippstadt (DE); WASSMUTH, Joachim, 33102 Paderborn (DE); WESSELINK, Harm, 59555 Lippstadt (DE)
(86) Internationale Anmeldenummer: PCT/EP2008/066182
(87) Internationale Veröffentlichungsnummer: WO 2009/068542

(56) Entgegenhaltungen:
- EP-A- 1 759 920
- DE-A1- 10 241 214
- DE-A1-102007 002 691
- US-A1- 2005 141 234
- SCHOTT C ET AL: "CMOS three axis hall sensor and joystick application" SENSORS, 2004. PROCEEDINGS OF IEEE VIENNA, AUSTRIA OCT. 24 - 27, 2004, PISCATAWAY, NJ, USA,IEEE, 24. Oktober 2004 (2004-10-24), Seiten 977-980, XP010793570 ISBN: 978-0-7803-8692-1
- KEJIK P ET AL: "First fully CMOS-integrated 3D hall probe" SOLID-STATE SENSORS, ACTUATORS AND MICROSYSTEMS, 2005. DIGEST OF TECHN ICAL PAPERS. TRANSDUCERS '05. THE 13TH INTERNATIONAL CONFERENCE ON SEOUL, KOREA JUNE 5-9, 2005, PISCATAWAY, NJ, USA,IEEE, Bd. 1, 5. Juni 2005 (2005-06-05), Seiten 317-320, XP010828024 ISBN: 978-0-7803-8994-6

## Beschreibung

Die vorliegende Erfindung betrifft einen Scheinwerfer für ein Kraftfahrzeug mit einem Gehäuse, in dem wenigstens ein Lichtmodul aufgenommen ist. Die Aufnahme des Lichtmoduls ermöglicht eine Schwenkbewegung um eine Querachse zur Verstellung der Leuchtweite und eine Schwenkbewegung um eine Hochachse zur Verstellung der Leuchtrichtung. Zur Erfassung der Lage des Lichtmoduls ist eine Messeinrichtung vorgesehen.

Moderne Scheinwerfer können nicht nur zur Nachführung der Leuchtweite um eine horizontal verlaufende Querachse verstellt werden, sondern sind für so genannte dynamische Kurvenlichtfunktionen auch um eine vertikal verlaufende Hochachse schwenkbar. Das Ziel der überlagerten Scheinwerferbewegungen besteht in der verbesserten Ausleuchtung der Fahrbahn auch in Kurven oder bei geänderten Ladezuständen oder Fahrzeuglagen. Wesentliches Kriterium ist, den Gegenverkehr nicht zu blenden. Dies ist insbesondere bei der Ausführung des Scheinwerfers als Xenon-Scheinwerfer erforderlich.

Die Bewegung des Lichtmoduls innerhalb des Gehäuses des Scheinwerfers wird aktuell mit Schrittmotoren umgesetzt. Das bedeutet, dass keine kontinuierliche Bewegung des Lichtmoduls möglich ist, sondern jede Position wird in kleinen Schritten angefahren. Bekannt ist dabei die Messung der Nulllage des Lichtmoduls im Gehäuse des Scheinwerfers bezüglich der Schwenkbewegung um die Querachse. Damit wird die horizontale Ebene eingestellt, bis zu der das emittierte Licht reicht. Wird die Ebene überschritten, so kann der Gegenverkehr geblendet werden. Typischerweise wird diese Nulllage auch nur einmal während des Einschaltvorgangs des Scheinwerfers bestimmt. Zur Ermittlung der Nulllage in Bezug auf die vertikale Bewegung um die Querachse wird ein mechanischer Anschlag verwendet, der ebenfalls nur beim Einschalten des Scheinwerfers angefahren wird. Im weiteren Betrieb wird jede Position mit einer bestimmten Schrittzahl des Schrittmotors gleichgesetzt, so dass zum Erreichen einer Position die aktuelle Position des Lichtmoduls als bekannt angenommen werden muss. Hierin ist ein erhebliches Fehlerpotential enthalten, da die tatsächliche Position des Lichtmoduls lediglich über eine Auszählung der Schrittzahl erfolgen kann. Eine Rückinformation über die tatsächliche Verstellung des Lichtmoduls ist nicht gegeben.

Nachteilhaft ist bei einem mechanischen Anschlag, dass der Scheinwerfer beschädigt werden kann und kostenintensive Maßnahmen ergriffen werden müssen, um eine solche Schädigung auszuschließen. Ferner existiert keine Möglichkeit, die Orientierung des Lichtmoduls um die jeweiligen Achsen zu ermitteln.

Aus der DE 101 02 686 A1 ist ein Scheinwerfer mit einem Lichtmodul bekannt, das mindestens zwei unterschiedliche Positionen innerhalb eines Verschwenkbereiches anfahren kann. Die Verschwenkbewegung wird mittels eines Elektromotors, der mit einem Getriebe zusammenwirkt, realisiert. Für eine reproduzierbare Endstellung des Lichtmoduls werden verschiedene Lösungen, wie beispielsweise ein Endstellungsmikroschalter oder ein Schrittmotor vorgeschlagen. Dieser wird so gesteuert, dass eine festgelegte Anzahl von Umdrehungen in der einen oder anderen Richtung ausgeführt wird, wobei eine kreisförmig ausgebildete Bahn, die mit einem Schieber zusammenwirkt, vorgesehen ist, um eine Information über die Position abzugreifen.

Aus der DE 102 41 214 A1 ist ein gattungsgemäßer Scheinwerfer für ein Kraftfahrzeug bekannt, der eine Einrichtung zum Verschwenken eines Lichtmoduls um eine Hochachse aufweist. Verschwenkt wird dabei vorzugsweise ein Lichtmodul des kurveninneren Scheinwerfers in Abhängigkeit von entsprechenden Fahrzeugkenngrößen. Diese Kenngrößen können beispielsweise ein Lenkradeinschlagwinkel oder der Lenkwinkel der Vorderräder sein. Wird die Lenkung vom Fahrer beispielsweise nach rechts eingeschlagen, so schwenkt das Lichtmodul im kurveninneren Scheinwerfer ebenfalls nach rechts. Im Ergebnis wird die in die Kurve gekrümmte Fahrbahn besser ausgeleuchtet.

Der Scheinwerfer umfasst eine Sensoranordnung zur Erfassung eines aktuellen Schwenkwinkels des jeweiligen Lichtmoduls, umfassend einen mit der schwenkbaren Leuchteinheit gekoppelten Positionsgeber und ein im Fahrzeug fest montiertes Sensorelement zur Ausgabe eines elektrischen Ausgangssignals in Abhängigkeit des aktuellen Schwenkwinkels. Das Sensorelement umfasst einen Hallsensor und der Positionsgeber besteht aus einem magnetisch wirksamen Element. Eine Schaltflanke des elektrischen Ausgangssignals des Hallsensors ist als Anzeige des aktuellen Schwenkwinkels der Leuchteinheit auswertbar.

Bei den aus dem Stand der Technik bekannten Messeinrichtungen zur Erfassung eines Schwenkwinkels eines Lichtmoduls in einem Scheinwerfer entsteht das Problem, dass jeder Schwenkbewegung eine separate Messeinrichtung zugeordnet werden muss. Derzeit wird die Orientierung eines Lichtmoduls eines Scheinwerfers für die vertikale und die horizontale Bewegungsebene unabhängig voneinander betrachtet und erfasst. Die charakteristischen Bewegungsparameter des Lichtmoduls sind einerseits der Leuchtweitenwinkel bezogen auf die vertikale Ebene und andererseits der Schwenkwinkel bezogen auf die horizontale Ebene.

Die getrennte Messung der jeweiligen Verstellbewegungen ist dadurch bedingt, dass gemäß des Standes der Technik lediglich ein- oder zweidimensionale Messeinrichtungen Verwendung finden, Dabei ist jedem Freiheitsgrad eine eigene Messeinrichtung zugeordnet. Herkömmliche Hallsensoren stellen eine Schaltflanke bereit, die über das elektrische Ausgangssignal des Hallsensors ermittelt und zur Anzeige gebracht werden kann. Damit ist die messtechnische Erfassung der Änderung eines Magnetfeldes möglich, was jedoch auf eine Dimension begrenzt ist.

Es ist daher die Aufgabe der vorliegenden Erfindung, einen Scheinwerfer für ein Kraftfahrzeug mit einer Messeinrichtung zur erweiterten Erfassung der Lage des Lichtmoduls zu schaffen.

Diese Aufgabe wird ausgehend von einem Scheinwerfer für ein Kraftfahrzeug gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Messeinrichtung einen Sensor aufweist, der zur räumlichen Erfassung der Lage des Lichtmoduls im Scheinwerfer ausgebildet ist.

Mit der erfindungsgemäßen Ausführung der Messeinrichtung wird der Vorteil erreicht, dass mit einer einzigen Messeinrichtung die Lage des Lichtmoduls im Raum ermittelt werden kann. Der Sensor ist hierfür als dreidimensionaler Hallsensor ausgebildet. Dreidimensionale Hallsensoren werden auch als Magnetfeldsensoren bezeichnet und basieren auf einer Standard-CMOS-Technologie. Hierin ist eine Weiterentwicklung konventioneller Hallsensoren zu sehen, die anders als konventionelle Hallsensoren nicht nur Magnetfelder senkrecht zur Chipoberfläche messen können, sondern auch die Messung von Magnetfeldern parallel zur Chipoberfläche zulassen. Damit sind modulartig integrierbare dreidimensionale Magnetfeldsensoren verfügbar, welche zu niedrigen Kosten erhältlich sind und in großen Stückzahlen hergestellt werden können. Die Sensorchips besitzen für jede der drei magnetischen Achsen einen eigenen Sensor. Erfindungsgemäß wird daher vorgeschlagen, einen derartigen dreidimensionalen Magnetfeldsensor basierend auf dem Halleffekt zur Messung der Lage eines Lichtmoduls in einem Scheinwerfer zu qualifizieren. Mit dieser Messanordnung kann die räumliche Lage des Lichtmoduls sowohl hinsichtlich eventueller Linearversätze als auch hinsichtlich der Verkippungen eindeutig bestimmt werden. Im Ergebnis sind alle sechs Freiheitsgrade im Raum, nämlich drei translatorische und drei rotatorische Freiheitsgrade, erfassbar.

Vorteilhafterweise ist der Sensor als funktionsintegrierter Hallsensor mit wenigstens einer Einrichtung zur Signalverarbeitung und/oder einer Kommunikationseinrichtung zur direkten Bereitstellung der Messsignale an eine Steuereinheit ausgeführt. Durch den Einsatz eines CMOS-Prozesses bel der Herstellung solcher Hallsensoren lassen sich neben der eigentlichen Sensorschaltung auch weitere Komponenten in die einzelne Sensoreinheit integrieren. Die Sensorschaltung besteht aus einem Array von Hallelementen, das sowohl horizontale als auch vertikale Sensoren umfasst. Neben den Sensoranordnungen können Einrichtungen zur Signalverarbeitung vorgesehen sein, die über eine ebenfalls integrierte Kommunikationseinrichtung eine direkte Bereitstellung der Messsignale an eine Steuereinheit ermöglicht. Die Einrichtung zur Signalverarbeitung umfasst mehrere Auswerteblöcke, mit deren Hilfe unter Umständen applikationsspezifische Auswertungen der Messsignale erfolgen können. Der Sensor kann als robuste Einheit ausgeführt werden, welcher insbesondere für Temperaturbereiche von T > 125°C einsetzbar sind. Diese Anforderung muss zum Einsatz in einem Scheinwerfer für ein Kraftfahrzeug erfüllt werden, da witterungsabhängig bei Betrieb eines Scheinwerfers entsprechend hohe Temperaturen entstehen können. Ist der Sensor für Temperaturbereiche T > 125°C ausgelegt, kann dieser auch bei Extremsituationen im Einsatz als Messeinrichtung in einem Scheinwerfer für ein Kraftfahrzeug keinen Schaden nehmen und ein Drift im Messsignal unterbleibt.

Gemäß einer Weiterbildung der Messeinrichtung umfasst diese ein magnetfelderzeugendes Element in Form eines Permanentmagneten und/oder eines Elektromagneten. Damit kann ein Magnetfeld bereitgestellt werden, um die Funktion des Sensors zu gewährleisten. Das vom magnetfelderzeugenden Element bereitgestellte Magnetfeld bewegt sich relativ zum Sensor, so dass eine Änderung der Lage des Magnetfeldes im Raum durch den Sensor detektiert und ausgewertet werden kann. Der Permanentmagnet kann axial oder diametral magnetisiert sein. Ferner kann ein mehrpoliger Permanentmagnet eingesetzt werden, wobei auch Ringmagneten zur Bildung eines größeren Magnetfeldes eine vorteilhafte Ausführungsform darstellen. Je größer der Magnet gewählt wird, desto größer kann der Abstand zwischen dem Sensor und dem Magneten ausgebildet sein. Ferner können mehrere magnetfelderzeugende Elemente vorgesehen werden, um ein breiter ausgeführtes und stärkeres Magnetfeld zu erzeugen. Der Vorteil eines Elektromagneten besteht in einer höheren erreichbaren Magnetfeldstärke, jedoch wird eine Versorgungsleistung benötigt. Hingegen können Permanentmagneten temperaturbedingt eine Änderung der Magnetfeldstärke aufweisen, was insbesondere über lange Betriebsdauern beobachtet werden muss.

Im Folgenden werden Möglichkeiten der Anordnung des magnetfelderzeugenden Elementes sowie des Sensors aufgezeigt. Der Permanentmagnet oder der Elektromagnet erzeugt ein Magnetfeld, dass bezogen auf das magnetfelderzeugende Element ortsunveränderlich ist. Wird das magnetfelderzeugende Element relativ zum Sensor bewegt, so kann der Sensor die Ortsveränderung des Magnetfeldes auf Basis des so genannten Halleffektes über eine ausgebbare Hallspannung zur Anzeige bringen. Das ausgegebene Spannungssignal des Sensors korrespondiert folglich mit der Position des magnetfelderzeugenden Elementes.

Bei erfindungsgemäßer Anwendung eines dreidimensionalen Hallsensors kann die Position des magnetfelderzeugenden Elementes im Raum über ein entsprechend aufgeschlüsseltes Spannungssignal ausgegeben werden. Folglich bieten sich grundsätzlich zwei Möglichkeiten der Anordnung des magnetfelderzeugenden Elementes sowie des Sensors an. Einerseits kann der Permanentmagnet oder der Elektromagnet am Lichtmodul angeordnet werden, wobei der Sensor ortsfest im Gehäuse des Scheinwerfers angebracht ist. Andererseits kann der Permanentmagnet oder der Elektromagnet ortsfest im Gehäuse angeordnet werden und der Sensor wird am Lichtmodul befestigt und bewegt sich mit diesem mit. Im letzteren Fall muss jedoch der elektrische Anschluss des Sensors über das bewegte Lichtmodul auf das ruhende Gehäuse gelegt werden, wodurch ein höherer konstruktiver Aufwand entstehen kann.

Das Lichtmodul besteht im Wesentlichen aus einem Reflektorteil sowie einem Projektorteil. Beide Teile sind in einem Rahmen aufgenommen und verschwenken gemeinsam sowohl um die Querachse als auch um die Hochachse. Die Anordnung des magnetfelderzeugenden Elementes bzw. des Sensors am Lichtmodul ist dabei nicht auf einen bestimmten Teil begrenzt. Vorteilhaft ist eine Anordnung auf dem Reflektorteil, da sich dieser in den hinteren Bereich des Gehäuses des Scheinwerfers hinein erstreckt. Andererseits entsteht hier die größere thermische Belastung, da das Leuchtmittel im Reflektor aufgenommen ist und die wesentliche Wärmequelle darstellt. Auf Grund der günstigeren thermischen Verhältnisse ist die Messeinrichtung bevorzugt im unteren Bereich des Lichtmoduls anzuordnen. Der räumliche Abstand zwischen dem magnetfelderzeugenden Element und dem Sensor sollte möglichst klein gewählt werden, um die Stärke des Messsignals nicht unnötig zu schwächen.

Erfindungsgemäß ist das Lichtmodul als Bi-Xenon-Lichtmodul mit einem Shutter ausgeführt. Für die Umschaltung zwischen Abblendlicht und Fernlicht dient der Shutter dazu, ein lichtabschirmendes Element in einen Teil des emittierten Lichtstrahls hinein- und herauszuklappen. Wird der Scheinwerfer mit Abblendlicht betrieben, befindet sich das lichtabschirmende Element in dem Teil des emittierten Lichtstrahls, welcher bei Fernlicht dem Abblendlicht zugeschaltet wird. Derartige Shutter weisen einen elektromagnetischen Aktor auf, welcher einen Permanentmagneten oder wenigstens einen Elektromagneten aufweisen kann. Erfindungsgemäß wirkt dieses magnetfelderzeugende Element des Shutters gleichermaßen mit dem Sensor zusammen, und stellt ein Magnetfeld bereit, das zur Funktion des Sensors ausreichend stark ausgebildet ist.

Eine weitere Ausführungsform des erfindungsgemäßen Scheinwerfers weist einen Sensor und ein magnetfelderzeugendes Element auf, die gleichermaßen ortsfest im Gehäuse angeordnet sind. Um eine Änderung des Magnetfeldes hervorzurufen, ist ein magnetfeldbeeinflussender Körper vorgesehen, der am Lichtmodul angeordnet ist und sich mit der Bewegung des Lichtmoduls mitbewegt. Der magnetfelderzeugende Körper weist ferromagnetische Eigenschaften auf, durch die bei Bewegung des Körpers die Ausrichtung und damit die Topographie des Magnetfeldes beeinflusst wird. Im Ergebnis wird eine Änderung des Magnetfeldes im Raum erzeugt, die auf die tatsächliche Position des Lichtmoduls schließen lässt. Um eine Kalibrierung der Messeinrichtung vorzunehmen, ist ein einmaliger Messlauf erforderlich, um einen Zusammenhang über die tatsächliche Schwenkposition des Lichtmoduls um die Querals auch um die Hochachse und der ausgegebenen Spannungssignale des Hallsensors herzustellen. Über die Gebrauchsdauer des Scheinwerfers kann das Ergebnis dieses Zusammenhangs der Auswertung der tatsächlichen Position des Lichtmoduls zu Grunde gelegt werden.

Das Lichtmodul steht mit wenigstens einem elektrischen Versteller in Wirkverbindung, um die Schwenkbewegung des Lichtmoduls um die Querachse und um die Hochachse auszuführen. Gewöhnliche elektrische Versteller für Lichtmodule bestehen aus Schrittmotoren, die aufwendig ausgeführt und folglich hohe Kosten in der Beschaffung verursachen. Schrittmotoren ermöglichen durch die Auszählung der aufeinander folgenden Bewegungsschritte zwar eine Aussage über die aktuelle Position des Lichtmoduls, die jedoch bei erfindungsgemäßer Ausführung des Scheinwerfers nicht weiter erforderlich ist. Folglich können als elektrische Versteller einfache Gleichstrommotoren verwendet werden, die im einfachsten Fall als normale Bürstenmotoren ausgeführt sind. Diese auch als Kollektor- oder Kommutatormotoren bekannten Motoren stellen die einfachste Bauform von elektrischen Verstellern dar, und sind auf Grund der vollständigen Erfassung der Lage des Lichtmoduls im Raum für den vorliegenden Einsatz hinreichend.

Die vorliegende Erfindung bezieht sich ferner auf ein Verfahren zur Regelung der Lage eines Lichtmoduls in einem Scheinwerfer für ein Kraftfahrzeug. Zur Ausführung des Verfahrens weist der Scheinwerfer eine Gestalt gemäß des Anspruchs 1 auf, wobei die Messeinrichtung einen Sensor umfasst, mit dem eine räumliche, d.h. wenigstens dreidimensionale Erfassung der Lage des Lichtmoduls im Scheinwerfer ausgeführt wird, um den Schwenkwinkel des Lichtmoduls sowohl um die Querachse als auch um die Hochachse zu bestimmen. Die Information über die Lage des Lichtmoduls im Scheinwerfer wird an eine Steuereinheit übermittelt, um zusammenwirkend mit dem elektrischen Versteller einen Regelkreis zu bilden. Der Regelkreis umfasst folglich wenigstens drei Komponenten, die aus der Steuereinheit, aus der Messeinrichtung sowie dem elektrischen Versteller bestehen. Durch die Messeinrichtung wird die Information über die aktuelle Lage des Lichtmoduls bereitgestellt, wobei mittels der Steuereinheit ein Soll-Ist-Vergleich erfolgen kann, um mittels des elektrischen Verstellers das Lichtmodul im Scheinwerfer entsprechend nachzustellen.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Figur 1: eine schematische Ansicht eines ersten Ausführungsbeispiels der vorliegenden Erfindung und
- Figur 2: eine schematische Ansicht eines weiteren Ausführungsbeispiels der vorliegenden Erfindung unter Anwendung eines magnetfeldbeeinflussenden Körpers am Lichtmodul.

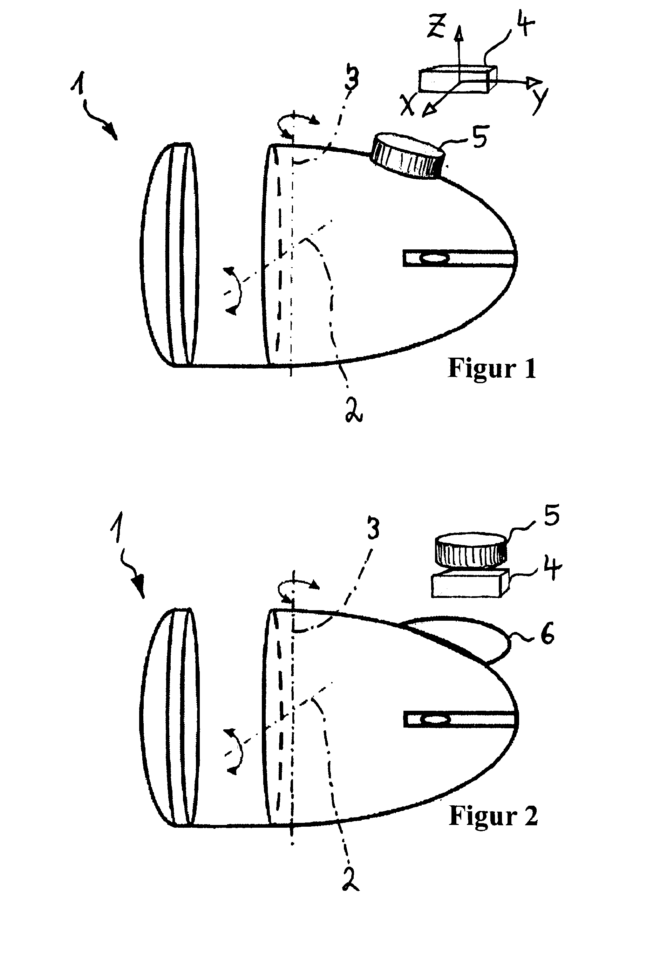

Figur 1 zeigt eine schematische Darstellung eines Lichtmoduls 1, welches im Gehäuse eines Scheinwerfers beweglich aufgenommen wird. Die Aufnahme des Lichtmoduls erfolgt gewöhnlich über einen Aufnahmerahmen, in dem das Lichtmodul 1 eine Schwenkbewegung um eine Querachse 2 zur Verstellung der Leuchtweite und eine weitere Schwenkbewegung um eine Hochachse 3 zur Verstellung der Leuchtrichtung ermöglicht. Das Lichtmodul 1 kann im Wesentlichen in einen Reflektorteil und in einen Projektorteil unterteilt werden. Beide Teile sind über einen Modulrahmen miteinander verbunden. Gemäß der Darstellung befindet sich rechtsseitig der Reflektorteil und linksseitig der Projektionsteil, so dass das emittierte Licht in der Bildebene nach links abstrahlt. Pfeile deuten die Rotationsmöglichkeit in beiden Richtungen an.

Im Gehäuse des Scheinwerfers ist ein Sensor 4 ortsfest angeordnet und bewegt sich nicht mit dem Lichtmodul 1 mit. Auf dem Reflektorteil des Lichtmodul 1 ist ein Permanentmagnet 5 aufgebracht, so dass sich dieser mit der Bewegung des Lichtmoduls 1 mitbewegt. Der Permanentmagnet 5 bildet ein magnetfelderzeugendes Element und kann entweder axial oder diametral magnetisiert sein. Ferner kann dieser als mehrpoliger Magnet ausgeführt sein. Der Permanentmagnet 5 erzeugt ein Magnetfeld, das derart ausgerichtet Ist, dass sich der ortsfeste Sensor 4 im Magnetfeld befindet. Durch die Anordnung des Permanentmagneten 5 auf dem Lichtmodul 1 bewegt sich das Magnetfeld gleichermaßen mit der Schwenkbewegung des Lichtmoduls 1 sowohl um die Querachse 2 als auch um die Hochachse 3. Erfindungsgemäß ist der Sensor 4 als dreidimensionaler Hallsensor ausgebildet, so dass eine Erkennung der Bewegung des Magnetfeldes in allen drei translatorischen Achsen im Raum möglich ist. Sowohl eine Einzelbewegung um die Quer- und um die Hochachse 2 und 3 kann separat detektiert werden, wobei auch eine überlagerte Bewegung messbar ist. Der dreidimensionale Hallsensor verfügt über eine entsprechende Anzahl von elektrischen Ausgängen zur Lieferung eines Messsignals sowohl in X-, in Y- und in Z-Richtung. Bewegt sich das Lichtmodul 1 beispielsweise um die Querachse 2, so wird eine wesentliche Änderung des Magnetfeldes bevorzugt in Z-Richtung sowie in Y-Richtung erfolgen. Bewegt sich hingegen das Lichtmodul 1 um die Hochachse 3, so ändert sich das Magnetfeld im Wesentlichen in X-Richtung. Folglich kann die Lage des Lichtmoduls 1 im Gehäuse des Scheinwerfers detektiert und als elektrisches Signal ausgegeben werden.

Figur 2 zeigt ein weiteres Ausführungsbeispiel eines Lichtmoduls 1 für einen Scheinwerfer, welches in einem Gehäuse integriert ist. Gemäß dieses Ausführungsbeispiels befindet sich ein magnetfeldbeeinflussender Körper 6 am Reflektorteil des Lichtmoduls 1. Der Sensor 4 sowie der Permanentmagnet 5 sind ortsfest im Gehäuse des Scheinwerfers aufgenommen. Folglich ist das Magnetfeld durch den Permanentmagneten 5 ortsfest gegenüber dem Sensor 4 angeordnet. Jedoch wird durch den Körper 6 das Magnetfeld beeinflusst, so dass die Richtung des magnetischen Flusses durch die Bewegung des Lichtmoduls 1 eine Änderung erfährt. Die hierdurch erzeugte Deviation im Magnetfeld kann in einen Zusammenhang gesetzt werden mit der Bewegung des Lichtmoduls 1, und ist durch den Sensor 4 erfassbar. Die Änderung des Magnetfeldes wird im Ergebnis auf gleiche Weise durch den Sensor 4 erfasst, wie diese bereits für das erste Ausführungsbeispiel beschrieben wurde. Der magnetfeldbeeinflussende Körper 6 kann entweder als zusätzliches Bauteil auf dem Lichtmodul 1 aufgesetzt werden, wobei auch konstruktionsbedingt vorhandene Komponenten des Lichtmoduls 1 als magnetfeldbeeinflussender Körper 6 ausgeführt sein können. Hierbei ist lediglich die Wahl eines ferritschen Materials notwendig, das beispielsweise für den Modulrahmen des Lichtmoduls 1 gewählt werden kann.

Die Erfindung beschränkt sich in ihrer Ausführung nicht auf die vorstehend angegebenen bevorzugten Ausführungsbeispiele. Vielmehr ist eine Anzahl von Varianten denkbar, die von der dargestellten Lösung auch bei grundsätzlich anders gearteten Ausführungen Gebrauch macht. Beispielsweise kann neben funktionsintegrierten Einrichtungen wie der einer Signalverarbeitung oder einer Kommunikationseinrichtung innerhalb des Sensors 4 auch die Steuereinheit mit dem Sensor 4 als vollständige Messeinrichtung ausgeführt sein. Die Steuereinheit kann ferner in einem Steuergerät integriert sein, wie es für Xenon-Scheinwerfer bekannt ist. Eine Weiterbildung der Steuereinheit kann beispielsweise mit Achssensoren der Beladezustand des Kraftfahrzeuges messen, so dass mit der erfindungsgemäßen Messeinrichtung die erforderliche Lage des Lichtmoduls 1 im Scheinwerfer abhängig von der Beladesituation des Kraftfahrzeugs nachgestellt werden kann.

### Bezugszeichenliste

- 1: Lichtmodul
- 2: Querachse
- 3: Hochachse
- 4: Sensor
- 5: Permanentmagnet
- 6: magnetfeldbeeinflussender Körper

## Patentansprüche

1. Scheinwerfer für ein Kraftfahrzeug mit einem Gehäuse, in dem wenigstens ein Lichtmodul (1) aufgenommen ist, wobei die Aufnahme eine Schwenkbewegung um eine Querachse (2) zur Verstellung der Leuchtweite und eine Schwenkbewegung um eine Hochachse (3) zur Verstellung der Leuchtrichtung ermöglicht, wobei eine Messeinrichtung zur Erfassung der Lage des Lichtmoduls (1) vorgesehen ist,**dadurch gekennzeichnet, dass** die Messeinrichtung einen Sensor (4), der zur räumlichen Erfassung der Lage des Lichtmoduls (1) im Scheinwerfer als dreidimensionaler Hallsensor ausgebildet ist, und ein magnetfelderzeugendes Element aufweist, um zur Funktion des Sensors (4) ein Magnetfeld zu erzeugen, derart, dass eine Erkennung der Bewegung des Magnetfeldes in allen drei translatorischen Achsen im Raum möglich ist und, dass das Lichtmodul (1) als Bi-Xenon-Lichtmodul mit einem Shutter ausgeführt ist, wobei der Shutter einen elektromagnetischen Aktor aufweist, der zugleich das magnetfelderzeugende Element bildet.

2. Scheinwerfer nach Anspruch 1, **dadurch gekennzeichnet, dass** der Sensor (4) als funktionsintegrierter Hallsensor mit wenigstens einer Einrichtung zur Signalverarbeitung und/oder einer Kommunikationseinrichtung zur direkten Bereitstellung der Messsignale an eine Steuereinheit ausgeführt ist.

3. Scheinwerfer nach einem der Ansprüche 1 oder 2, **dadurch gekennzeichnet, dass** das magnetfelderzeugende Element in Form eines Permanentmagneten (5) und/oder eines Elektromagneten ausgebildet ist.

4. Scheinwerfer nach Anspruch 1, **dadurch gekennzeichnet, dass** der Permanentmagnet (5) und/oder der Elektromagnet am Lichtmodul (1) und der Sensor (4) ortsfest im Gehäuse angeordnet ist.

5. Scheinwerfer nach Anspruch 1, **dadurch gekennzeichnet, dass** der Permanentmagnet (5) und/oder der Elektromagnet ortsfest im Gehäuse und der Sensor (4) am Lichtmodul (1) angeordnet ist.

6. Scheinwerfer nach einem der Ansprüche 1 bis 5 **dadurch gekennzeichnet, dass** der Permanentmagnet (5) axial oder diametral magnetisiert ist oder als ein mehrpoliger Magnet ausgebildet ist.

7. Scheinwerfer nach einem der vorgenannten Ansprüche, **dadurch gekennzeichnet, dass** der Sensor (4) und das magnetfelderzeugende Element ortsfest im Gehäuse angeordnet sind und das Lichtmodul (1) einen magnetfeldbeeinflussenden Körper (6) aufweist, um bei Änderung der Lage des Lichtmoduls (1) eine Änderung des Magnetfeldes hervorzurufen.

8. Scheinwerfer nach einem der vorgenannten Ansprüche, **dadurch gekennzeichnet, dass** das Lichtmodul (1) mit wenigstens einem elektrischen Versteller in Wirkverbindung steht, um die Schwenkbewegung des Lichtmoduls (1) um die Querachse (2) und/oder um die Hochachse (3) auszuführen, wobei der elektrische Versteller als Gleichstrommotor nach Art eines Bürstenmotors ausgeführt ist.

9. Verfahren zur Regelung der Lage eines Lichtmoduls (1) in einem Scheinwerfer für ein Kraftfahrzeug, das zumindest um eine Querachse (2) zur Verstellung der Leuchtweite und um eine Hochachse (3) zur Verstellung der Leuchtrichtung mit einem elektrischen Versteller schwenkbar ist, wobei eine Steuereinheit vorgesehen ist, die über eine Messeinrichtung die Lage des Lichtmoduls (1) erfasst,
**dadurch gekennzeichnet, dass** die Messeinrichtung einen als dreidimensionalen Hallsensor ausgeführten Sensor (4), mit dem eine räumliche Erfassung der Lage des Lichtmoduls (1) im Scheinwerfer ausgeführt wird, um den Schwenkwinkel des Lichtmoduls (1) sowohl um die Querachse (2) als auch um die Hochachse (3) zu bestimmen, undein magnetfelderzeugendes Element aufweist, um zur Funktion des Sensors (4) ein Magnetfeld zu erzeugen, derart, dass eine Erkennung der Bewegung des Magnetfeldes in allen drei translatorischen Achsen im Raum möglich ist und, dass das Lichtmodul (1) als Bi-Xenon-Lichtmodul mit einem Shutter ausgeführt ist, wobei der Shutter einen elektromagnetischen Aktor aufweist, der zugleich das magnetfelderzeugende Element bildet.

10. Verfahren nach Anspruch 9, **dadurch gekennzeichnet, dass** die Information über die Lage des Lichtmoduls (1) im Scheinwerfer an die Steuereinheit übermittelt wird, um zusammenwirkend mit dem elektrischen Versteller einen Regelkreis zu bilden.

11. Verfahren nach Anspruch 9 oder 10 , **dadurch gekennzeichnet, dass** der elektrische Versteller ein Gleichstrommotor nach Art eines Bürstenmotors ist.

## Claims

1. Headlamp for a motor vehicle with a housing, in which at least one light module (1) is supported, wherein the support allows a swivel movement around a transverse axis (2) for the adjustment of the headlamp range and a swivel movement around a vertical axis (3) for the adjustment of the headlamp direction, a measuring unit for the detection of the position of the light module (1) being provided, **characterized in that**
the measuring unit comprising a sensor (4) being embodied as a three-dimensional Hall sensor for the spacial detection of the position of the light module (1) in the headlamp, and having a magnetic-field - generating element for the generation of a magnetic field for the function of the sensor (4), so that a detection of the movement of the magnetic field in all three translational spatial axes is possible and that the light module (1) is embodied as a Bi-Xenon light module with a shutter, wherein the shutter has an electromagnetic actuator which at the same time forms the magnetic-field-generating element.

2. Headlamp according to Claim 1, **characterized in that** the sensor (4) is embodied as a functionally integrated Hall sensor with at least one element for signal processing and/or one communication element for the direct provision of the measuring signals to a control unit.

3. Headlamp according to one of the Claims 1 or 2, **characterized in that** the magnetic-field-generating element is embodied as a permanent magnet (5) and/ or an electromagnet.

4. Headlamp according to Claim 1, **characterized in that** the permanent magnet (5) and/or the electromagnet is arranged on the light module (1) and the sensor (4) is arranged in a stationary manner in the housing.

5. Headlamp according to Claim 1, **characterized in that** the permanent magnet (5) and/or the electromagnet is arranged in a stationary manner in the housing and the sensor (4) is arranged on the light module (1).

6. Headlamp according to one of the Claims 1 to 5, **characterized in that** the permanent magnet (5) is axially or diametrically magnetized or that it is embodied as a multipolar magnet.

7. Headlamp according to one of the previous Claims, **characterized in that** the sensor (4) and the magnetic-field-generating element are arranged in the housing in a stationary manner and that the light module (1) has a magnetic-field-influencing body (6) causing a change in the magnetic field when a change in the position of the light module (1) occurs.

8. Headlamp according to one of the previous Claims, **characterized in that** the light module (1) is actively connected with at least one electric adjuster to execute the swivel movement of the light module (1) around the transverse axis (2) and/or around the vertical axis (3), wherein the electric adjuster is embodied as a direct current motor after the manner of a brushed motor.

9. Procedure for the control of the position of a light module (1) in a headlamp for a motor vehicle, being at least swivelable around a transverse axis (2) for the adjustment of the light range and around a vertical axis (3) for the adjustment of the direction of the light by means of an electrical adjuster, wherein a control unit is provided, which detects the position of the light module (1) via a measuring unit, **characterized in that** the measuring unit has a sensor (4) embodied as a three-dimensional Hall sensor, with which a spacial detection of the position of the light module (1) in the headlamp is executed to determine the swivel angle of the light module (1) around the transverse axis (2) as well as around the vertical axis (3), and has a magnetic-field-generating element for the generation of a magnetic field serving the function of the sensor (4), so that a detection of the movement of the magnetic field in all three translational spatial axes is possible and that the light module (1) is embodied as a Bi-Xenon light module with a shutter, the shutter having an electromagnetic actuator which at the same time forms the magnetic-field-generating element.

10. Procedure according to Claim 9, **characterized in that** the information relating to the position of the light module (1) in the headlamp is transmitted to the control unit in order to form a control loop together with the electric adjuster.

11. Procedure according to Claim 9 or 10, **characterized in that** the electric adjuster is a direct current motor after the manner of a brushed motor.

## Revendications

1. Projecteur pour un véhicule automobile avec un boîtier dans lequel au moins un module d'éclairage (1) est reçu, le dispositif de réception permettant un mouvement pivotant autour d'un axe transversal (2) pour le réglage de la portée lumineuse et un mouvement pivotant autour d'un axe vertical (3) pour le réglage de la direction d'éclairage, un dispositif de mesure étant prévu pour saisir la position du module d'éclairage (1),
**caractérisé en ce que**
le dispositif de mesure présente un capteur (4) réalisé en tant que capteur à effet Hall tridimensionnel pour la saisie spatiale de la position du module d'éclairage (1) dans le projecteur et un élément générateur de champ magnétique pour engendrer un champ magnétique pour le fonctionnement du capteur (4) de telle manière que la détection du mouvement du champ magnétique dans tous les trois axes de translation dans l'espace soit possible et que le module d'éclairage (1) soit réalisé en tant que module d'éclairage au bi-xénon avec un occulteur, l'occulteur présentant un actuateur électromagnétique qui forme l'élément générateur de champ magnétique en même temps.

2. Projecteur selon la revendication 1, **caractérisé en ce que** le capteur (4) est réalisé en tant que capteur à effet Hall à fonction intégrée avec au moins un dispositif de traitement de signaux et/ou un dispositif de communication pour la mise à disposition directe des signaux de mesure à une unité de contrôle.

3. Projecteur selon l'une des revendications 1 ou 2, **caractérisé en ce que** l'élément générateur de champ magnétique est réalisé sous forme d'un aimant permanent (5) et/ou d'un électro-aimant.

4. Projecteur selon la revendication 1, **caractérisé en ce que** l'aimant permanent (5) et/ou l'électro-aimant sont disposés sur le module d'éclairage (1) et le capteur (4) est disposé de manière stationnaire sur le boîtier.

5. Projecteur selon la revendication 1, **caractérisé en ce que** l'aimant permanent (5) et/ou l'électro-aimant sont disposés de manière stationnaire sur le boîtier et le capteur (4) est disposé sur le module d'éclairage (1).

6. Projecteur selon l'une des revendications 1 à 5, **caractérisé en ce que** l'aimant permanent (5) est magnétisé de manière axiale ou diamétrale ou réalisé en tant qu'aimant multipolaire.

7. Projecteur selon l'une des revendications précédentes, **caractérisé en ce que** le capteur (4) et l'élément générateur de champ magnétique sont disposés de manière stationnaire sur le boîtier et que le module d'éclairage (1) présente un corps qui influence le champ magnétique (6) pour provoquer un changement du champ magnétique lors d'un changement de la position du module d'éclairage (1).

8. Projecteur selon l'une des revendications précédentes, **caractérisé en ce que** le module d'éclairage (1) est en liaison active avec au moins un dispositif de réglage électrique pour réaliser le mouvement pivotant du module d'éclairage (1) autour de l'axe transversal (2) et/ou l'axe vertical (3), le dispositif de réglage électrique étant réalisé en tant que moteur à courant continu du type d'un moteur à collecteur.

9. Procédé pour le réglage de la position d'un module d'éclairage (1) dans un projecteur pour un véhicule automobile qui est pivotant au moins autour d'un axe transversal (2) pour le réglage de la portée lumineuse et autour d'un axe vertical (3) pour le réglage de la direction d'éclairage avec un dispositif de réglage électrique, une unité de contrôle étant prévue qui saisit la position du module d'éclairage (1) au moyen d'un dispositif de mesure,
**caractérisé en ce que**
le dispositif de mesure présente un capteur (4) réalisé en tant que capteur à effet Hall tridimensionnel avec lequel la saisie spatiale de la position du module d'éclairage (1) dans le projecteur est réalisée pour déterminer l'angle de pivotement du module d'éclairage (1) tant autour de l'axe transversal (2) qu'autour de l'axe vertical (3) et qui présente un élément générateur de champ magnétique pour engendrer un champ magnétique pour le fonctionnement du capteur (4) de telle manière que la détection du mouvement du champ magnétique dans tous les trois axes de translation dans l'espace soit possible et que le module d'éclairage (1) soit réalisé en tant que module d'éclairage au bi-xénon avec un occulteur, l'occulteur présentant un actuateur électromagnétique qui forme l'élément générateur de champ magnétique en même temps.

10. Procédé selon la revendication 9, **caractérisé en ce que** l'information sur la position du module d'éclairage (1) dans le projecteur est transmise à l'unité de contrôle pour former une boucle de réglage ensemble avec le dispositif de réglage électrique.

11. Procédé selon la revendication 9 ou 10, **caractérisé en ce que** le dispositif de réglage électrique est un moteur à courant continu du type d'un moteur à collecteur.
